# EUROPÄISCHE PATENTSCHRIFT

(11) **EP 0 710 578 B1**
(45) Veröffentlichungstag und Bekanntmachung des Hinweises auf die Patenterteilung: **11.11.1998**
(21) Anmeldenummer: 95114992.1
(22) Anmeldetag: 23.09.1995
(51) Int. Cl.: B60J 5/04, B60R 21/04

(54) **Verkleidungsteil, insbesondere Türverkleidungsträger, für ein Kraftfahrzeug**
Trim portion, in particular door trim panel, for a motor vehicle
Elément d'habillage, en particulier panneau d'habillage pour une porte, pour un véhicule automobile

(30) Priorität: 03.11.1994 DE 4439221
(43) Veröffentlichungstag der Anmeldung: 08.05.1996
(73) Patentinhaber: Kunststoffwerk Katzbach GmbH, 93413 Cham (DE)
(72) Erfinder: Erber, Arnold, D-93413 Cham (DE)
(74) Vertreter: Matschkur, Lindner Blaumeier Patent- und Rechtsanwälte

(56) Entgegenhaltungen:
- EP-A- 0 060 557
- EP-A- 0 061 132
- EP-A- 0 236 291
- EP-A- 0 623 491
- GB-A- 2 272 670
- PATENT ABSTRACTS OF JAPAN vol. 017 no. 493 (M-1475) ,7.September 1993 & JP-A-05 124054 (KASAI KOGYO CO LTD) 21.Mai 1993,
- PATENT ABSTRACTS OF JAPAN vol. 015 no. 345 (C-0864) ,3.September 1991 & JP-A-03 137140 (IKEDA BUSSAN CO LTD) 11.Juni 1991,
- PATENT ABSTRACTS OF JAPAN vol. 014 no. 357 (M-1005) ,2.August 1990 & JP-A-02 127015 (TOYO TIRE & RUBBER CO LTD) 15.Mai 1990,

## Beschreibung

Die Erfindung bezieht sich auf ein Verkleidungsteil, insbesondere Türverkleidungsträger, für ein Kraftfahrzeug, aus einem vorzugsweise geschäumten Kunststoff mit einem expandierbaren Grundkörper und einer Versteifungsmatte.

Derartige Verkleidungsteile, speziell die vorstehend angesprochenen Türverkleidungsträger, werden in der Automobilindustrie aus diversen Materialien gefertigt, wie beispielsweise Faserpreßstoffen, Flach/Sisal gebunden in Harzen, HM-PP, Polyurethan-Schaumstoffhart mit Glasfaser oder Glasmatten, sowie aus Thermoplasten. Diese Träger haben als Oberfläche ein Dekor, das mit Kleber aufkaschiert oder direkt mit dem Träger verbunden ist.

All diese bekannten Verkleidungsteile haben ein hohes Gewicht und es fehlt an integrierten Schutzzonen beim Seitencrash. Neben fehlendem zusätzlichem Wärme- und Schallschutz haben viele von ihnen eine Wasseraufnahme, die bis zu 40 % Gewichtsanteil betragen kann und somit mit der Zeit nicht nur zu einer Zerstörung des Verkleidungsteils, sondern auch zu einer erheblichen Erhöhung des Gesamtgewichts des Fahrzeugs führt.

Dies gilt auch für ein aus der JP-A-2-127 015 bekanntgewordenes Verkleidungsteil der eingangs genannten Art. Es fehlt bei diesem Verkleidungsteil nach der japanischen Anmeldung eine integrierte Schutzzone beim Seitencrash. Darüber hinaus sind Versteifungsmatten im Innern des expandierbaren Grundkörpers angeordnet, was die Fertigung erschwert.

Der Erfindung liegt daher die Aufgabe zugrunde, ein Verkleidungsteil, insbesondere einen Türverkleidungsträger, der eingangs genannten Art so auszugestalten, daß er einfach herstellbar ist, sich vielfältig an die unterschiedlichsten Anforderungen in den verschiedenen Bereichen eines Fahrzeugs anpassen läßt und neben der Ermöglichung hoher Schutzwerte beim Seitencrash auch hohe Beständigkeit und geringe Alterungserscheingungen aufweist.

Zur Lösung dieser Aufgabe ist erfindungsgemäß vorgesehen, daß das Verkleidungsteil aus einem Polystyrol (EPS)- oder Polyphenylenoxid (PPO)-Grundkörper besteht, der wenigstens einseitig an eine Glasfasermatte angeschäumt ist, und daß in den Grundkörper energieabsorbierende Elemente eingebettet sind.

Der wesentliche Unterschied des erfindungsgemäßen Verkleidungsteils gegenüber der Anordnung nach der japanischen Anmeldung besteht zum einen darin, daß der Grundkörper einseitig nicht nur an eine einfache Dekorschicht aus Textilien oder gewebten oder ungewebten Stoffen angeschäumt ist, sondern an eine Glasfasermatte, die eine Verstärkungsschicht bildet. Ob auf diese Glasfasermatte dann eine weitere Dekorschicht kommt oder eine Lackierung oder sonst etwas, ist unerheblich. Darüber hinaus sind die energieabsorbierenden, in den Grundkörper eingebetteten Elemente von extremer Bedeutung, da sie im Gegensatz zur einfachen Versteifungsmatte 3 im Rahmen der JP-A-2-127 015 eine zusammendrückbare Knautschzone bilden, die speziell bei einem Seitencrash von Bedeutung ist.

Durch die erfindungsgemäße Ausbildung, wobei in vielen Fällen es vorteilhaft ist, wenn die genannte Glasfasermatte beidseits an den Grundkörper angeschäumt ist, ergeben sich in Verbindung mit den eingebetteten energieabsorbierenden Elementen einerseits sehr leicht herstellbare und andererseits sehr vielseitig in ihrer Funktion und ihren Eigenschaften abwandelbare Verkleidungsteile, wobei es beispielsweise durch eingeformte Kammern zur Aufnahme von Einbauten auch möglich ist, einen Seitenairbag mit einzubauen, so daß gleich in mehrfacher Hinsicht eine erhöhte Sicherheit für die Fahrgäste eines Kraftfahrzeugs gegeben ist.

Die energieabsorbierenden Elemente können in den Grundkörper eingebettete Füllstoffe, beispielsweise spezielle Kunststoffschaumstoffe, oder z.B. auch unter Deformierung energieabsorbierende Elemente aus Metall sein, wie beispielsweise Faltrohre od.dgl.

Schließlich liegt es auch noch im Rahmen einer Weiterbildung der Erfindung, daß der Grundkörper bereichsweise unterschiedliche Dicken und/oder unterschiedliche Rohdichten aufweist, so daß in besonderen Crashzonen der Grundkörper dicker ausgebildet ist und diese Zonen mit anderen Bereichen durch relativ elastische dünnere Stege verbunden sind, wodurch Material und Gewicht an Stellen eingespart wird, an denen es mangels entsprechender Beanspruchung im Betriebsfall oder in einem möglichen Crashfall nicht benötigt wird. Die Erzielung unterschiedlicher Rohdichten kann dabei auch relativ problemlos beim Aufschäumen in der Form erzielt werden, in die vorher selbstverständlich die Versteifungsschichten eingelegt worden sind. Die energieabsorbierenden Elemente können entweder ebenfalls in die Form vorher eingelegt werden oder anschließend in entsprechende Hohlräume des Grundkörpers eingesetzt werden. Im Falle der Verwendung von Füllstoffen in Form von Kunststoffschäumen können diese in einem zweistufigen Verfahren ebenfalls unmittelbar in der Form mit erzeugt werden.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Ansicht eines erfindungsgemäßen Türverkleidungsträgers,
- Fig. 2: einen Schnitt längs der Linie II-II in Fig. 1, und
- Fig. 3: einen vergrößerten Schnitt durch den oberen Bereich III in Fig. 2.

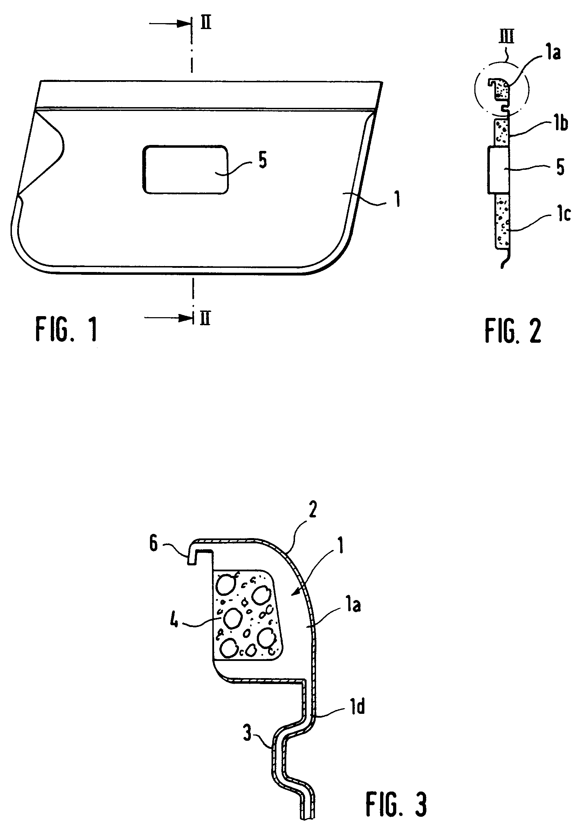

Der gezeigte Türverkleidungsträger besteht aus einem Grundkörper 1, der abschnittsweise sehr unterschiedliche Dicken aufweist. Neben den besonders dicken zum Auffangen von Seitenkräften dienenden Abschnitten 1a bis 1c sind diese verbindenden Bereiche mit geringerer Dicke vorgesehen, wobei man insbesondere in Fig. 3 den dünneren Verbindungsabschnitt 1d erkennt. An diesen Grundkörper ist im dargestellten Ausführungsbeispiel beidseitig eine Verstärkungsschicht 2 bzw. 3 in Form einer Glasfasermatte od.dgl. angeschäumt. Bei 4 erkennt man ein eingebettetes energieabsorbierendes Element in Form eingebetteter Füllstoffe, das - wie bereits weiter oben erwähnt wurde - auch als Faltrohr aus Metall ausgebildet sein könnte. Die Lage der energieabsorbierenden Elemente richtet sich nach der speziellen Anordnung im Türverkleidungsteil und wird dort vorgesehen, wo bei einem Seitenaufprall besonders starke Kräfte abzufangen sind, die ansonsten zu einem zu starken Eindringen der Tür in den Innenraum und zu einer Verletzung der Insassen führen könnten. Bei 5 ist eine eingeformte Kammer zur Aufnahme eines Seitenairbags gezeigt, während bei 6 ein angeformter Haken zum Einhängen des Türverkleidungsträgers in die metallische Fahrzeugtür zu erkennen ist. Die auf den Türverkleidungsträger aufgebrachte Dekorschicht ist im gezeigten Ausführungsbeispiel nicht mit dargestellt.

Die Erfindung ist nicht auf das dargestellte Ausführungsbeispiel beschränkt. So wäre es insbesondere auch möglich, die erfindungsgemäße Konstruktion, bei der EPS- oder PPO-Grundkörper mit angeschäumten Verstärkungsschichten einerseits und eingebetteten energieabsorbierenden Elementen andererseits kombiniert sind, für andere Kraftfahrzeugteile, wie beispielsweise Stoßstangen, Kotflügel oder Kofferraumauskleidungen, zu verwenden.

In allen diesen Fällen ergeben sich gegenüber anderen Materialien hohe Gewichtsvorteile. Des weiteren können über die Verstärkungswerkstoffe die mechanischen Eigenschaften, wie Längenausdehnung und Druckfestigkeit, beeinflußt werden. Zusätzlich ist der gefährdete Schulter- und Beckenbereich durch den Einsatz hochenergieabsorbierender Elemente hinsichtlich Verletzungen beim Seitenaufprall gemildert. Ein erfindungsgemäßer Türverkleidungsträger kann durch unterschiedliche Rohdichten und den Einsatz der energieabsorbierenden Elemente bezüglich Haptik und Härte des Schaumstoffs auf Komfort eingestellt werden. Für den Designer ergeben sich stilistische Feinheiten und schließlich läßt sich ein erfindungsgemäßes Verkleidungsteil kostengünstig herstellen und darüber hinaus auch problemlos thermisch verwerten, da die verwendeten Materialien alle recycelfähig sein können.

## Patentansprüche

1. Verkleidungsteil, insbesondere Türverkleidungsträger, für ein Kraftfahrzeug, aus einem vorzugsweise geschäumten Kunststoff mit einem expandierbaren Grundkörper und einer Versteifungsmatte, dadurch gekennzeichnet, daß es aus einem Polystyrol (EPS)- oder Polyphenylenoxid (PPO)-Grundkörper (1) besteht, der wenigstens einseitig an eine Glasfasermatte (2, 3) angeschäumt ist, und daß in den Grundkörper (1) energieabsorbierende Elemente (4) eingebettet sind.

2. Verkleidungsteil nach Anspruch 1, dadurch gekennzeichnet, daß das energieabsorbierende Element (4) aus in den Grundkörper (1) eingebetteten Füllstoffen besteht.

3. Verkleidungsteil nach Anspruch 1 oder 2, dadurch gekennzeichnet, daß das energieabsorbierende Element (4) ein Faltrohr aus Metall umfaßt.

4. Verkleidungsteil nach einem der Ansprüche 1 bis 3, dadurch gekennzeichnet, daß der Grundkörper (1) in einzelnen Bereichen (1a, 1b, 1c, 1d) unterschiedliche Dicken und/oder unterschiedliche Rohdichten aufweist.

5. Türverkleidungsträger nach einem der Ansprüche 1 bis 4, gekennzeichnet durch eine eingeformte Kammer (5) zur Aufnahme von Einbauten, insbesondere eines Seitenairbags.

## Claims

1. Trim portion, in particular door trim panel for a motor vehicle, composed of a preferably foam plastics material with an expandable base body and a reinforcing matting, characterised in that it consists of a polystyrene or polyphenol oxide (PPO) base body (1), which is foam injected at least on one side on a fibreglass matting (2, 3) and in that energy-absorbing elements (4) are embedded in the base body (1).

2. Trim portion according to claim 1, characterised in that the energy-absorbing element (4) consists of fillers embedded in the base body (1).

3. Trim portion according to claim 1 or 2, characterised in that the energy-absorbing element (4) comprises a metal folding tube.

4. Trim portion according to one of claims 1 to 3, characterised in that the base body (1) has in individual regions (1a, 1b, 1c, 1d) different thicknesses and/or different raw densities.

5. Trim portion according to one of claims 1 to 4, characterised by a moulded chamber (5) for receiving fittings, in particular a side air-bag.

## Revendications

1. Pièce de garniture, notamment support de garniture de portière pour un véhicule automobile, réalisée en une matière plastique de préférence sous forme de mousse, comprenant un corps de base expansé et un mat de renfort, **caractérisée** en ce qu'elle est constituée d'un corps de base (1) en un polystyrène (EPS) ou en oxyde de polyphénylène (PPO), qui est moulé sous forme de mousse, au moins d'un côté, sur un mat de fibres de verre (2, 3), et en ce que dans le corps de base (1) sont noyés des éléments d'absorption d'énergie (4).

2. Pièce de garniture selon la revendication 1, **caractérisée** en ce que l'élément d'absorption d'énergie (4) est constitué de charges noyées dans le corps de base (1).

3. Pièce de garniture selon la revendication 1 ou 2, **caractérisée** en ce que l'élément d'absorption d'énergie (4) comprend un soufflet tubulaire en métal.

4. Pièce de garniture selon l'une des revendications 1 à 3, **caractérisée** en ce que le corps de base (1) présente dans des zones individuelles (1a, 1b, 1c, 1d) différentes épaisseurs et/ou des masses volumiques apparentes différentes.

5. Support de garniture de portière selon l'une des revendications 1 à 4, **caractérisée** par une chambre (5) qui y est formée par moulage et est destinée à recevoir des éléments encastrés, notamment un coussin gonflable de sécurité latéral.
